# EUROPEAN PATENT APPLICATION

(11) **EP 0 833 528 A2**
(43) Date of publication of application: **01.04.1998**
(21) Application number: 97116720.0
(22) Date of filing: 25.09.1997
(51) Int. Cl.: H04Q 7/12

(54) **Two-way radio paging system having base station and mobile station implementing two-way communication of transmission reception**

(30) Priority: 27.09.1996 JP 256924/96
(71) Applicant: NEC CORPORATION, Tokyo (JP)
(72) Inventor: Ezaki, Kazuhiko, Kakegawa-shi, Shizuoka (JP)
(74) Representative: VOSSIUS & PARTNER

(57) **Abstract**

In a two-way radio paging system whose communication efficiency is improved, when a mobile station (2) becomes incapable of transmitting, unnecessary communication is not repeated between a transmission base station (1) and a reception base station (3). When a state is noticed that where it is capable of transmitting from the mobile station (2), the transmission base station (1) transmits calling-signal to the mobile station (2). The mobile station (2) receives the calling signal, before transmitting reception response toward the reception base station (3). The reception base station (3) receives the reception response. One communication is completed. When the reception base station (3) failed to receive the reception response, the transmission base station (1) transmits again calling-signal. This is repeated until the reception base station (3) succeeds in receiving the reception response from the mobile station (2). When a state is noticed that where it is difficult to continue transmission from the mobile station (2), the side of base station causes subsequent communication processing to limit to calling transmission from the transmission base station (1) to the mobile station (2). The reception base station (3) does not receive the reception response from the mobile station (2) to complete one communication.

## Description

The present invention relates to a two-way radio paging system. More to particularly, this invention relates to a two-way radio paging system having base station and mobile station each of which has means for implementing two-way communications of transmission / reception of signal.

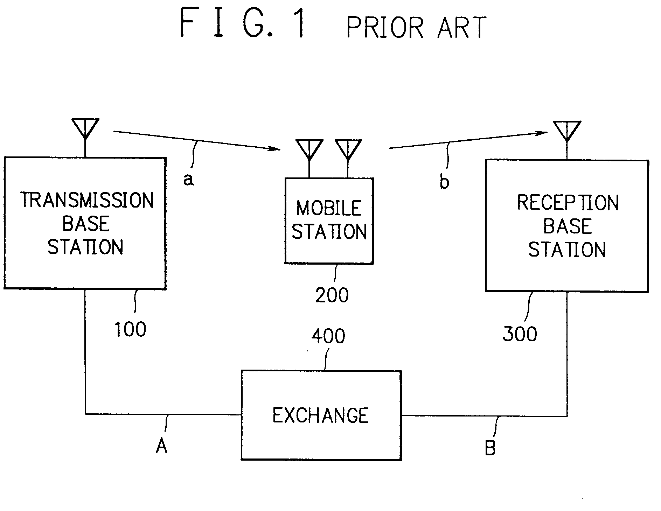

Fig. 1 is a system configuration view showing conventional two-way radio paging system. A system configuration of the conventional tow-way radio paging system is described referring to Fig. 1.

A transmission base station 100 is connected to an exchange 400 by a control line and a data line A. A reception base station 300 is connected to the exchange 400 by a control line and a data line B. The transmission base station 100 is connected to the reception base station 300 on the ground through the exchange 400. Among the transmission base station 100, the reception base station 300, and the exchange 400, switched transmission of data is performed synchronously. The transmission base station 100 is a dedicated base station for transmission, and transmits forward data a to a mobile station by radio communication. The mobile station 200 receives forward data a from the transmission base station 100 to implement transmission of reverse data b to the reception base station 300 by radio communication. The reception base station 300 is a dedicated base station for reception, and receives reverse data b from the mobile station 200 by radio. The mobile station 200 receives data for synchronization which data is transmitted periodically from the transmission base station 100 through both of the control line and the data line, thereby implementing establishment of synchronization and preservation of synchronization between the mobile station and the base station.

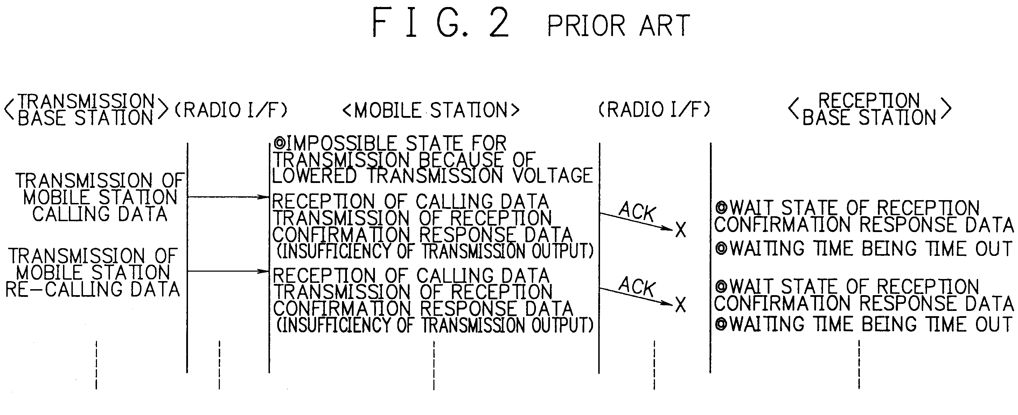

Operation of the conventional two-way radio paging system is described referring to Figs. 1 and 2.

Fig. 2 is a sequence chart showing conventional operation procedure of transmission / reception in the system configuration of Fig. 1 by using radio interface between the mobile station and the base station.

When transmission from the mobile station 200 becomes impossible because transmission power source voltage of the mobile station 200 lowers, communication between the mobile station and the base station is implemented as follows.

When the transmission base station 100 transmits forward data a for calling of the mobile station, the mobile station receives the forward data a. The mobile station 200 completes reception of the forward data a, before transmitting the reverse data b for reception confirmation response with frame-timing specified by forward data a to the reception base station 300. In the reception base station 300, the mobile station 200 is informed the frame-timing for transmitting the reverse data b for the purpose of the reception confirmation response from the exchange 400 through the control line B beforehand. The mobile station 200 waits to implement the reception of the reverse data b with this frame-timing for the purpose of the reception confirmation response. At this time however, the reverse data b for the purpose of the reception confirmation response transmitted from the mobile station 200 is transmitted with insufficient output in order to be received by the reception base station 300 because of insufficient output caused by drop of the transmission power source voltage of the mobile station 200. For this reason, the reception base station 300 fails to receive the reverse data b for the purpose of the reception confirmation response, before entering retry-processing operation.

The reception base station 300 notices failure of reception of the reverse data b for the purpose of the reception confirmation response from the mobile station 200 to the exchange 400, the exchange 400 instructs retransmission of the forward data a for the purpose of calling the mobile station to the transmission base station. Thereby, the transmission base station 100 executes retransmission of the forward data for calling of the mobile station. After this, in the mobile station 200, reception of the forward data a for the purpose of re-calling mobile station and transmission of the reverse data b for the purpose of reception confirmation response are repeated, while in the reception base station 300, failure of reception of reverse data b for the purpose of the reception acknowledgement response and retry-processing are repeated.

In order to complete this repetitive communication, it is necessary that the predetermined number of retry-processing is terminated, or it is necessary that the mobile station 200 recovers from insufficient condition of output to the condition capable of transmitting with sufficient output to be received by reception base station 300 due to recovery of the transmission power source voltage of the mobile station 200. Consequently, unnecessary communication is implemented during period of retry-processing until establishing either condition thereof, causing amount of communication in system to increase, and causing communication efficiency to deteriorate.

Japanese Patent Application Laid-Open No. HEI 07-107546 which is the second prior art reference discloses RADIO TRANSMISSION SYSTEM. According to the reference, a base station which is a master station implements communication to a plurality of mobile stations which are slave stations using forward slot of each frame. The system is the radio transmission system in which transmission / reception of signal is implemented between the master station and the plurality of slave stations by a time-division multiplex access (TDMA) which implements communication from a plurality of slave stations to a main station using reverse slot of each frame.

The master station comprises slot number-ratio setting means for setting reverse slot number-ratio in every frame-unit, forward slot number control means for controlling forward slot number in every frame-unit used for communication to each of the slave stations in accordance with the slot number-ratio set by the slot number-ratio setting means, and noticing means for noticing the slot number-ratio set by the forward slot number control means to whole slave stations within radio zone.

Each of the slave stations comprises reverse slot number control means for controlling reverse slot number in every frame-unit used for communication to the master station in accordance with the noticed slot number-ratio.

In virtue of the configuration, a setting section of the base station sets slot-configuration of forward and/or reverse data in the frame based upon communication amount between base stations. The base station and the radio control section of the mobile station control slot configuration within each frame which is transmitted and received in answer to slot configuration specified by the setting section. Further, the setting section specifies slot configuration in every one frame or several frames. In virtue of the fact, the radio communication system utilizes the slot within the frame effectively, and can improve communication efficiency.

In the first prior art of the two-way radio paging communication system, the mobile station 200 transmits a reception confirmation response to the reception base station 300 in response to a calling which is transmitted from the transmission base station 100 to the mobile station 200, at this time, depending on the state of the mobile station 200, when it is impossible to transmit the reception confirmation response from the mobile station 200, the transmission base station 100 repeats retransmission until the reception base station 300 receives the reception confirmation response from the mobile station 200, and the reception base station 300 repeats reception standby of the reception confirmation response. At the time of implementing transmission and reception, each base station implements assignment control both of transmission frame and reception frame. The frame assigned to the mobile station whose transmission is impossible can not be used for communication to the other mobile station, unnecessary communication is executed accordingly. As a result, communication amount of whole system is increased, thus there is a problem that communication state comes into inefficient, thus avoiding efficient use of limited frequency resource.

In the second prior art of the radio communication system, when it implements control for improving communication efficiency, it is a presupposition that transmitting function of the mobile station operates normally, improvement of communication efficiency is realized after session between the base station and the mobile station. Consequently, depending on the state of the mobile station, when transmission operation becomes impossible from the mobile station, improvement of communication efficiency is not realized. In such the case, the side of the base station judges that continuation of communication is impossible, thus breaking communication. At this time, although in the mobile station only reception operation is possible, since communication to the base station is interrupted, even if there is an effective data to be transmitted from the base station to the mobile station, the side of the mobile station can not use the data.

In view of the foregoing, it is an object of the present invention for achieving the above-mentioned problem to provide a two-way radio paging system which both of the base station and the mobile station implement transmission and reception, is capable of avoiding unnecessary transmission and waiting of response reception in the side of the base station, thus reducing amount of communication in terms both of transmission channel and reception channel in the system, with the result that it becomes possible to utilize limited frequency channel effectively.

It is another object of the present invention to provide a two-way radio paging system which both of the base station and the mobile station implement transmission and reception, is capable of implementing only data reception in the mobile station regardless of advisability of transmission from the mobile station, in the mobile station, at the time of data reception, the condition of the mobile station is that transmission is impossible and reception is possible.

According to one aspect of the present invention, for achieving the above-mentioned object, there is provided a two-way radio paging system which comprises a transmission base station for transmitting calling signal, a mobile station having means for notifying a matter that transmission from the mobile station to a base station becomes impossible toward the base station, and means for shifting communication after notification between the mobile station and the base station to data transmission from the base station and data reception at the mobile station, wherein the mobile station receives the calling signal from the transmission base station, and transmits a reception confirmation response signal to the calling signal, a reception base station for receiving the reception confirmation response signal transmitted from the mobile station, and an exchange for judging that transmission of said calling signal which is implemented from the transmission the base station to the mobile station is normally completed based upon information from both of the transmission base station and the reception base station, the two-way radio paging system having a first function for predicting to judge the fact that it becomes impossible to continue transmitting operation of the reception confirmation response signal from own station to the reception base station depending upon decreasing rate of power source residual capacity of own station, a second function for notifying the fact that it becomes impossible to continue transmitting operation of the reception confirmation response signal from own station to the reception base station, a third function for judging the fact that it becomes possible to continue transmitting operation of the reception confirmation response signal from own station to the reception base station depending upon recovery of power source residual capacity of own station, and a fourth function for noticing that continuation of transmitting operation of the reception confirmation response signal is capable of being implemented from said own station to the reception base station.

According to another aspect of the present invention, there is provided a two-way radio paging system in the above aspect, which has a fifth function for shifting a mode to a mode judging the fact that transmission of the calling signal which is transmitted from the transmission base station to the mobile station is normally completed, when the exchange is noticed that it becomes impossible to continue transmitting operation of the reception confirmation response signal from the mobile station to the reception base station by the first function of the mobile station without reception of the reception confirmation response signal to be transmitted from the mobile station, and a sixth function for shifting a mode to a mode judging the fact that transmission of the calling signal which is transmitted from the transmission base station to the mobile station is normally completed, when the exchange is noticed that continuation of transmitting operation is capable of implementing from the mobile station to the reception base station by the third function of the mobile station by reception of the reception confirmation response signal transmitted from the mobile station.

The above and further objects and novel features of the invention will be more fully understood from the following detailed description when the same is read in connection with the accompanying drawings. It should be expressly understood, however, that the drawings are for purpose of illustration only and are not intended as a definition of the limits of the invention.

### BRIEF DESCRIPTION OF THE DRAWINGS

Fig. 1 is a system configuration view showing conventional two-way radio paging system;
Fig. 2 is a sequence chart showing conventional operation procedure of transmission / reception in the system configuration of Fig. 1;
Fig. 3 is a system configuration view showing one preferable embodiment of two-way radio paging system according to the present invention;
Fig. 4 is a block diagram showing one preferable embodiment of an internal configuration of a mobile station in the system configuration view of the two-way radio paging system according to the present invention of Fig. 3;
Fig. 5 is a block diagram showing one preferable embodiment of circuit configuration of the voltage detection section in the mobile station of Fig. 4;
Fig. 6 is a flow chart showing operation of the control section in the mobile station of Fig. 4;
Fig. 7 is a block diagram showing one preferable embodiment of internal configuration of a transmission base station and a reception base station in the system configuration view of the two-way radio paging system according to the present invention of Fig. 3;
Fig. 8 is a view showing one preferable embodiment of format of a forward data a and a reverse data b;
Fig. 9 is a frame configuration view showing an order within the frame of the forward data a;
Fig. 10 is a view showing a format example (TDD-mode) of message of the reverse data b;
Fig. 11 is a sequence chart showing operation procedure in accordance with the present preferable embodiment in the system configuration of Fig. 3; and
Fig. 12 is a view showing transmission state by example of voltage level of the transmission power source.

### DETAILED DESCRIPTION OF THE PREFERRED EMBODIMENTS

A preferable embodiment of the present invention will now be described in detail referring to the accompanying drawings.

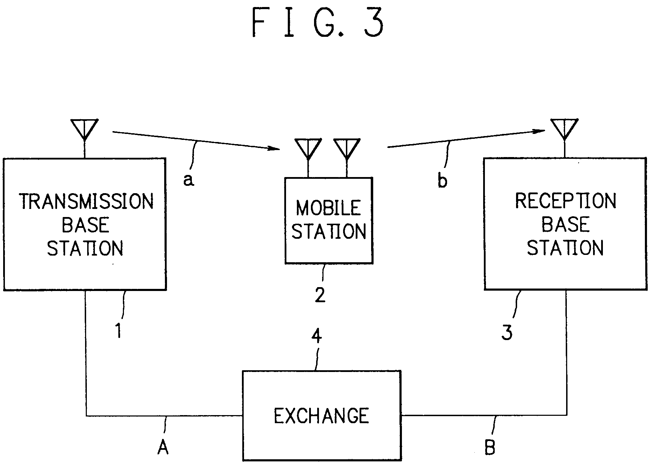

Fig. 3 is a system configuration view showing one preferable embodiment of two-way radio paging system according to the present invention. A transmission base station 1 is connected to an exchange 4 by a control line and a data line A. A reception base station 3 is connected to the exchange 4 by a control line and a data line B. The transmission base station 1 is connected to the reception base station 3 on the ground through the exchange 4. Among the transmission base station 1, the reception base station 3, and the exchange 4, switched transmission of data is performed synchronously. The transmission base station 1 is a dedicated base station for transmission, and transmits forward data a to a mobile station by radio communication. The mobile station 2 receives the forward data a from the transmission base station 1 to implement transmission reverse data b to the reception base station 3 by radio communication. The reception base station 3 is a dedicated base station for reception, and receives the reverse data b from the mobile station 2 by radio communication. The mobile station 2 receives data for synchronization which data is transmitted periodically from the transmission base station 1 through both of the control line and the data circuit, thereby implementing establishment of synchronization and preservation of synchronization between the mobile station and the base station.

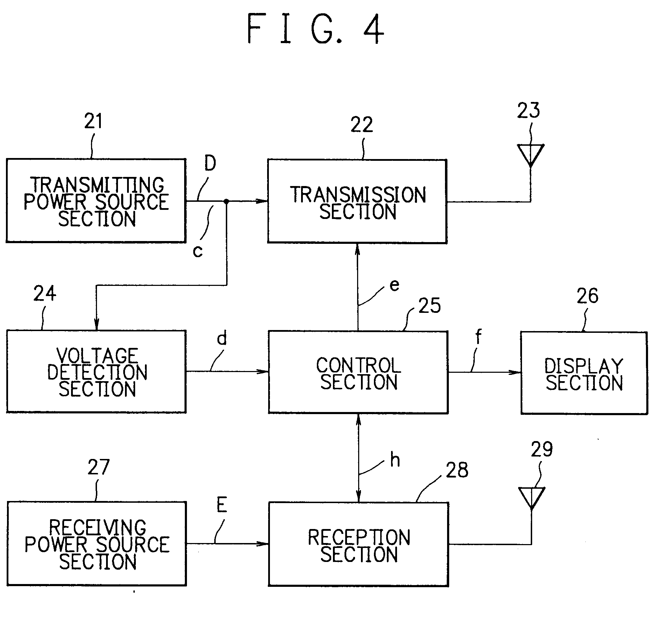

Fig. 4 is a block diagram showing one preferable embodiment of an internal configuration of a mobile station 2 in the system configuration view of the two-way radio paging system according to the present invention of Fig. 3. In Fig. 4, the mobile station 2 comprises a transmitting power source section 21 for supplying transmitting power c to a transmission section 22 through a transmitting power source line D, a voltage detection section 24 for monitoring power source voltage of the transmitting power c,
thus judging whether or not the power source voltage of the transmitting power c is higher than prescribed level to notice the result of judgement to a transmission section 22, a reception section 28, and a control section 25 for controlling a display section 26 as a low voltage notification signal d, and a receiving power source section 27 for performing power source supply to the reception section 28 through a receiving power source line E.

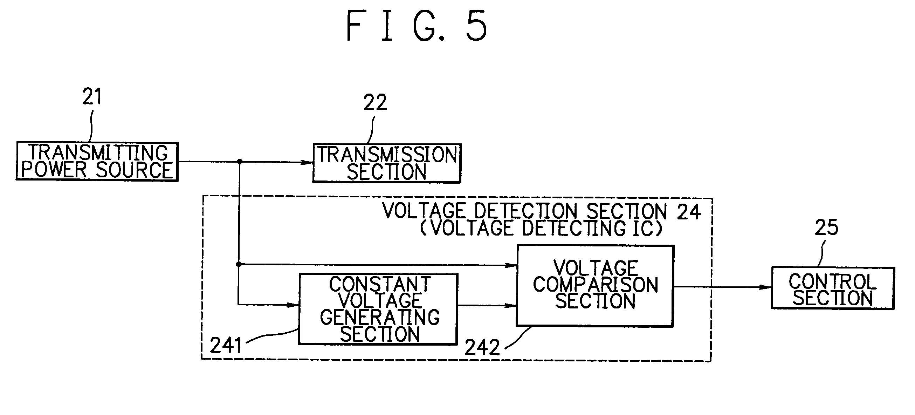

Fig. 5 is a block diagram showing one preferable embodiment of circuit configuration of the voltage detection section 24 in the mobile station 2 as shown in Fig. 4.

In Fig. 5, the voltage detection section 24 comprises a constant voltage generating section 241 which generates 2.7V-voltage and a voltage comparison section 242 which compares the power source voltage for transmission with voltage generated by the constant voltage generating section 241. As shown in Fig. 5, 2.7V-voltage generated by the constant voltage generating section 241 is inputted to the voltage comparison section 242. The power source voltage for transmission is directly inputted to the voltage comparison section 242. The voltage comparison section 242 outputs the power source voltage for transmission to the control section 25 as it is, when the voltage-value of the power source voltage for transmission is higher than the 2.7V-voltage. When the power source voltage for transmission drops to lower than 2.7V-voltage, the voltage comparison section 242 outputs GND-voltage (0V) to the control section 25.

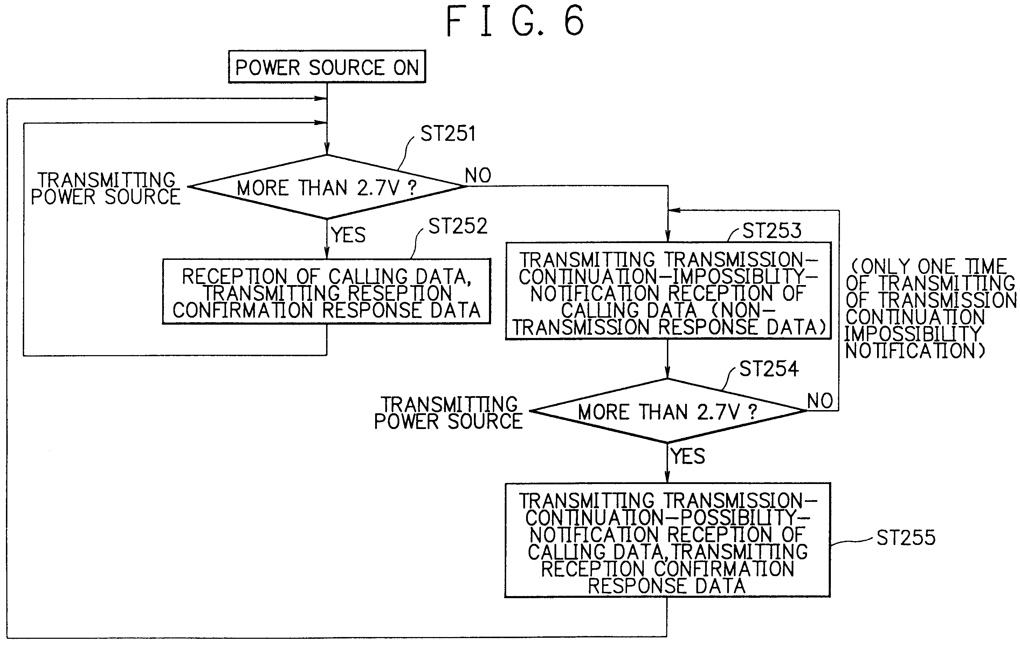

Fig. 6 is a flow chart showing operation of the control section 25 in the mobile station 2. In the control section 25, when output voltage from the voltage detection section 24 changes 2.7V-voltage into the GND-voltage, the control section 25 judges the condition of communication as condition where impossibility of transmission is predicted, while when output voltage from the voltage detection section 24 changes the GND-voltage into 2.7V-voltage, the control section 25 judges the condition of communication as condition where normal transmission is capable (ST 251, ST 254). When the power source voltage for transmission is more than 2.7V-voltage, the control section 25 transmits the reception confirmation response data (ST 252). When the power source voltage for transmission is less than 2.7V-voltage, the control section 25 transmits the transmission continuation impossibility notification (ST 253). When output voltage from the voltage detection section 24 changes the GND-voltage into 2.7V-voltage, the control section 25 judges the condition of communication as condition where normal transmission is capable, thus transmitting the transmission continuation possibility notification (ST 255).

When transmission is implemented in this configuration, the control section 25 generates transmission data to provide toward the transmission section 22. The control section 25 controls the transmission section 22 to output the transmission data from the transmission section 22. The control section 25 implements transmission through a transmission antenna 26 by radio communication. When reception is implemented in this configuration, the control section 25 controls a reception section 28 to implement data reception through a reception antenna 29. The control section 25 takes the received data therein to implement data processing. Further, the control section 25 causes the transmission section 22 to implement inhibiting control and/or enabling control of transmission by the low voltage notification signal d.

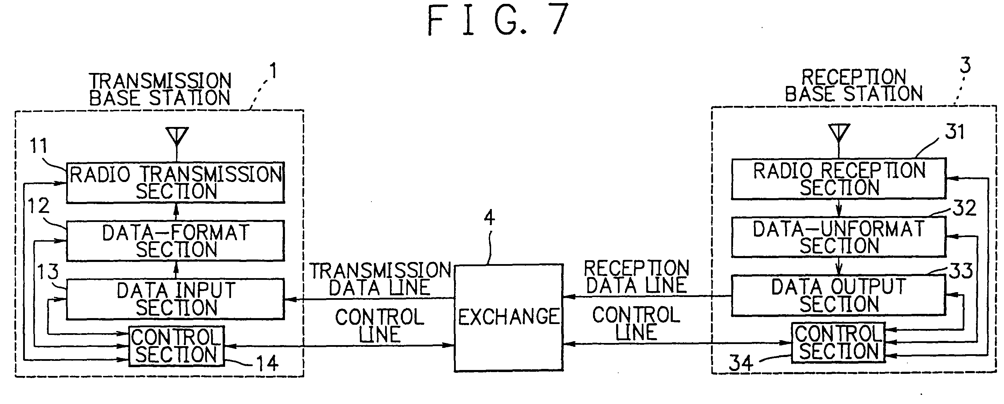

Fig. 7 is a block diagram showing one preferable embodiment of internal configuration of a transmission base station 1, a reception base station 3, and an exchange 4 in the system configuration view of the two-way radio paging system according to the present invention of Fig. 3. In Fig. 7, the transmission base station 1 comprises a radio transmission section 11, a data-format section 12, a data input section 13 and a control section 14. The reception base station 3 comprises a radio reception section 31, a data-unformat section 32, a data output section 33 and a control section 34.

Basic operation of the transmission base station 1 and the reception base station 3 will be described referring to the block diagram of Fig. 7. The exchange 4 controls both of the transmission base station 1 and the reception base station 3 with the control line employed.

With respect to the transmission base station, following basic operation is implemented. The exchange 4 transmits data to the data input section 13 of the transmission base station 1 using a transmission data line. The transmission base station 1 converts the data inputted to the data input section thereof into a signal format of the forward data at the data-format section 12. The transmission base station 1 transmits the formatted transmission data to the mobile station from the radio transmission section 11 through the antenna.

With respect to the reception base station 3, following basic operation is implemented. The radio reception section 31 of the reception base station 3 receives the data of the reverse data-format from the mobile station. The received data is transmitted to the data-unformat section 32 from the radio reception section 31 to be unformatted into data-format so as to be utilized in the side of the exchange 4. The received data which is unformatted at the data-unformat section 32 is transmitted to the exchange 4 by using a reception data line.

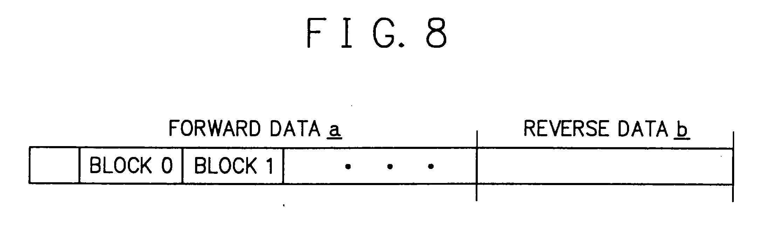

Fig. 8 is a view showing one preferable embodiment of format of the forward data a and the reverse data b. Fig. 8 shows that for example, the reverse data b starts at a block-boundary of the forward data a. With regard to the block-size, all block has 160mS of block-size.

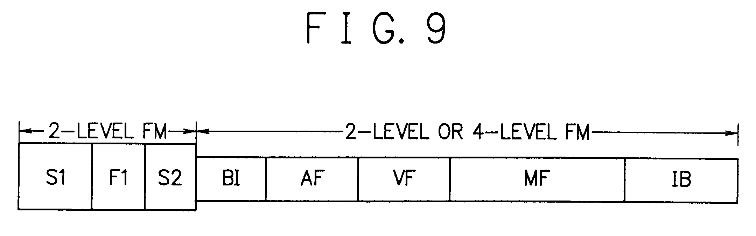

Fig. 9 is a frame configuration view showing an order within the frame of the forward data a. A field-boundary is not necessary to agree with a block-boundary. Fields S1, F1, and S2 commonly occur in whole forward sub-channel. BI, AF, and VF only occur in a control sub-channel. Actual message data starts just behind an S2-field of the data sub-channel.

In Fig. 9, S1 denotes synchronization 1 consisting of 112-bits of 1600BPS modulated with binary frequency modulation (FM). An FI denotes frame information which is 32-bits-code-word transmitted with 1600BPS of binary frequency modulation. An S2 denotes synchronization 2 which is definition of pattern providing timing information for synchronizing with higher speed frame. A BI denotes block information. A block information word starts from zero [0]. First 2BI-word (number 0, 1) includes information instructing decode of message in the forward data a. Additional BI-words instructed by numbers 2 to 31 are discriminated by word format type bits (f3, f2, f1, f0). Word format type BI word (0000-0110) describes manipulating method of FDD-reverse data b. Word format type BI word (0111) which describes operation of TDD-reverse data b is a set of two words. BI-words 2 to 31 are capable of indicating order of allocation of the set of two words which describe simultaneously both of FDD, TDD channels. In the representative case, it is four-word field consisting of BI-words 0 and 1 describing operation of forward data a and two BI-words describing operation of FDD or TDD reverse data b. An AF denotes address field which begins just behind block information word and consisting of information service address, and nation wide personal address. A VF denotes vector field.

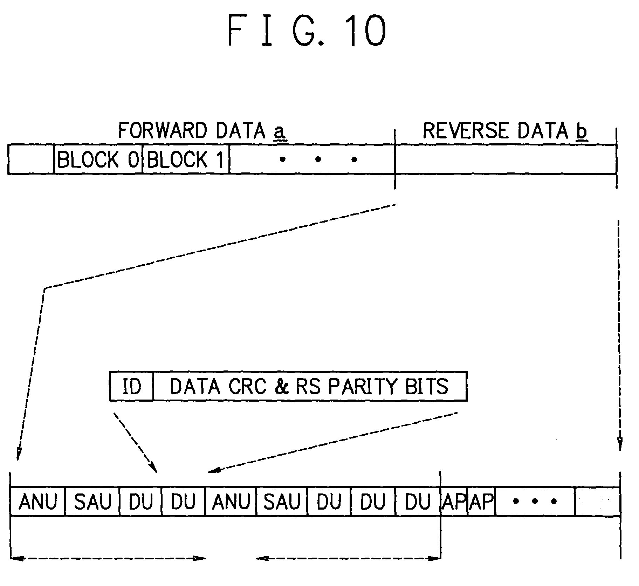

Fig. 10 is a format example (TDD-mode) of message of the reverse data b. In Fig. 10, an ANU denotes ACK/NACK unit. An AP denotes ALOHA packet. A DU denotes data unit. An SAU denotes start address unit. A data unit DU should be integral multiples of the packet. A data unit or continue data units follow a start address unit. In this example of Fig. 10, reverse data b of the FDD system starts from block 0 of the reverse data frame.

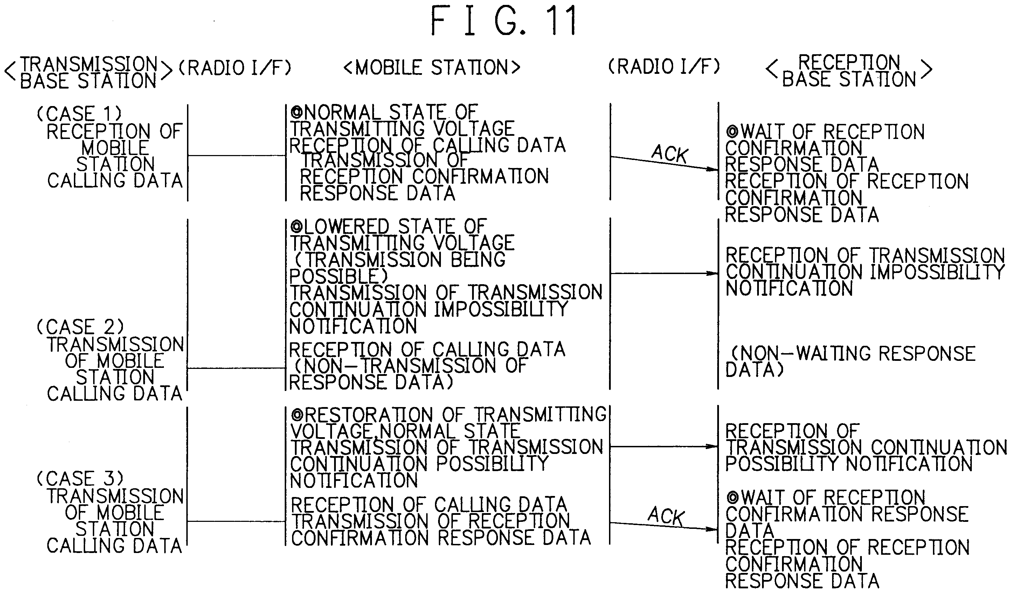

Next, Operation of a system will be described referring to both of Fig. 3 and Fig. 11. Fig. 11 is a sequence chart showing operation procedure in accordance with the present embodiment in the system configuration of Fig. 3 using radio interface between a mobile station and a base station. A case 1 of Fig. 11 is a sequence chart showing operation procedure in cases where the mobile station 2 of Fig. 3 is capable of transmitting, using the radio interface between the mobile station and the base station. The side of base station allocates a frame in which the mobile station 2 transmits a reverse data b, adding it to forward data a as a frame information. A transmission base station 1 transmits the mobile-station-calling-data of the forward data a toward the mobile station 2. The mobile station 2 receives the mobile-station-calling-data. After completion of the reception, the mobile station 2 transmits reception confirmation response data of the reverse data b with frame timing specified by the forward data a toward the reception base station 3. The reception base station 3 is given previous notice of the frame timing which the mobile station 2 transmits the reception-confirmation-response-data of the reverse data b from the exchange 4 through the control line B. The reception base station 3 waits in order to implement reception of the reception-confirmation-response-data of the reverse data b with this timing to receive thereof. When the reception base station 3 completes the reception of the reception-confirmation-response-data of the reverse data b, the communication of the case 1 is completed.

The reception-confirmation-response-data as the reverse data is that the side of reception base station 3 confirms that the mobile station 2 receives the forward data a transmitted from the side of the transmission base station 1. The reception-confirmation-response-data is capable of improving communication reliability of the two-way radio paging system.

In the case 1, when the forward data a as the calling data of the mobile station transmitted from the transmission base station 1 is not received at the mobile station 2 with the normal condition, the mobile station 2 transmits with the calling data of the mobile station as the reverse data b of retransmission request signal to the reception base station 3. The reception base station 3 receives the retransmission request signal from the mobile station 2 to notice toward the exchange 4. On account of the notification, the exchange 4 again allocates a frame which the mobile station 2 transmits reverse data b, thus controlling the transmission base station 1 so as to add to frame-information-forward data a to resend. The transmission base station 1 again transmits the mobile station calling data as the forward data a toward the mobile station 2 in accordance with control from the exchange 4.

A case 2 of Fig. 11 is a sequence chart showing operation procedure in cases where the mobile station 2 of Fig. 3 shifts from condition in which it is capable of transmitting data to condition in which it is predicted that the transmission becomes impossible, using the radio interface between the mobile station and the base station.

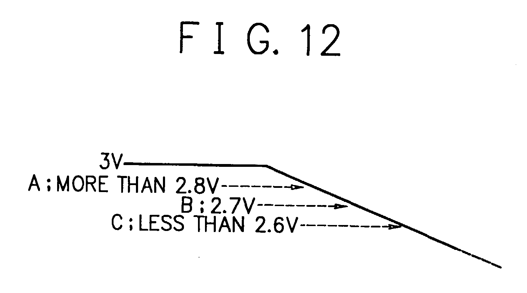

Fig. 12 is a view showing transmission state by one example of voltage level of the transmission power source. In Fig. 12, A denotes that data is capable of being transmitted, B denotes that it is predicted that data transmission becomes impossible, and C denotes that data is incapable of being transmitted.

In Fig. 11, the mobile station 2 determines that it is predicted that the transmission becomes impossible caused by drop of the voltage of transmission power source, thus transmitting the transmission-continuation-impossibility-notification by using the reverse data b. When the reception base station 3 receives the transmission-continuation-impossibility-notification, the side of base station shifts a mode to the mode which executes only data transmission from the transmission base station 1 to the mobile station 2 in respect of the mobile station 2 and the communication. After mode shifting, on the inside of the base station, frame allocation of the reverse data b from the mobile station 2 is not implemented. The communication of this case 2 is completed at a point of time when the forward data a is retransmitted from the transmission base station 1 to the mobile station 2.

Detailed operation in cases where the transmission-continuation-impossibility-notification from the exchange is received will be described referring to Fig. 7.

The exchange implements following control in terms of transmission / reception base station using the control line. Hereinafter, a mobile terminal and a transmission instruction portion of a reception-confirmation-response-data relate to one body of mobile terminal under the condition of transmission-continuation-impossibility.

In terms of the transmission base station, the exchange controls so that it causes the transmission instruction portion of the reception-confirmation-response-data within the forward data format from the transmission base station to counteract in the normal condition. The mobile terminal receives the forward data, thereby, the mobile terminal confirms that it is not necessary to transmit the reception-confirmation-response-data.

In terms of the reception base station, the exchange controls the reception base station so as to repeat reception operation until receiving the reception-confirmation-response-data within the reverse data format from the mobile terminal in the normal condition. When the reception base station receives the transmission-continuation-impossibility-notification from the mobile station, it causes the reception to notice from the exchange, thus controlling the reception base station so as to halt after reception operation of the reception-confirmation-response-data from the mobile terminal.

In the above case 2 of Fig. 11, when mobile station calling data as the forward data a transmitted from the transmission base station 1 is not received by the mobile station 2 with the normal communication condition, since the mobile station 2 does not transmit a re-transmission requirement signal as the reverse data b, the exchange 4 does not implement re-transmission processing of the mobile station calling data as the forward data a. This is the same operation as that of the radio selection paging system of forward one way direction of the first prior art described-above. Thus reliability of communication is maintained as well as that of the radio selection paging system of the first prior art.

A case 3 of Fig. 11 is a sequence chart showing operation procedure in cases where the condition of the mobile station 2 predicted to be transmission impossibility is changed into the condition being capable of transmitting by using radio interface between the mobile station and the base station. The mobile station 2 judges that transmission is capable of implementing because of recovery of the transmission power supply voltage. The mobile station 2 transmits a transmission-continuation-possibility-notification to the reception base station 3 through the reverse data b. When the reception base station 3 receives the transmission-continuation-possibility-notification, the side of the base station shifts from the operation mode shown in case 3 of Fig. 11 to the operation mode shown in case 1 of Fig. 11 concerning communication between the mobile station 2 and the side of base station. After the mode-shifting, the processing same as that of case 1 of Fig. 11 is implemented.

Next, operation of the mobile station 2 will be described referring to Fig. 4. In Fig. 4, the voltage detection section 24 monitors a power source for transmission of an output of the transmitting power source section 21. When the voltage is more than constant level, the voltage detection section 24 outputs the low voltage notification signal d using invalid logic to the control section 25. The low voltage notification signal d is a level signal whose initial-value is invalid logic. The voltage detection section 24 detects that power source voltage for transmission is decreased less than constant level, thus outputting the low voltage notification signal d using effective logic to the control section 25. Unless the voltage detection section 24 detects that the power source voltage for transmission is increased again more than constant level, thus outputting continuously the low voltage notification signal d using effective logic.

When the control section 25 detects that the low voltage notification signal d is changed into effective logic, the control section 25 controls so as to transmit transmission-continuation-impossibility-notification-data to the transmission section 22. The transmission section 22 transmits the transmission-continuation-impossibility-notification-data through the transmission antenna 23. The control section 25 inhibits the later transmission, at the same time, and controls so as to display to be transmission continuation impossibility to the display section 26. The display section 26 displays that the transmission continuation is impossible.

Next, when the voltage detection section 24 detects that voltage level of the transmitting power source rises again more than constant level, the voltage detection section 24 outputs low voltage notification signal d with invalid logic. The voltage detection section 24 outputs the low voltage notification signal d with invalid logic continuously, unless the voltage detection section 24 detects that the power source voltage for transmission is lowered again less than constant value.

Next, when the control section 25 detects that the low voltage notification signal d is changed into invalid logic, the control section 25 controls the transmission section 22 so as to transmit the transmission-continuation-possibility-notification-data. Based upon this control, the transmission section 22 transmits the transmission-continuation-possibility-notification-data through the transmission antenna 23. The control section 25 allows the subsequent transmission on and after transmission of the transmission-continuation-possibility-data, at the same time, controlling the display section 26 so as to display that transmission is capable of continuing. Based upon this control, the display section 26 displays that the transmission is capable of continuing. Consecutively, the control section 25 causes the transmission data emitted by the transmission antenna 23 to receive while controlling the reception section 28 through the reception antenna 29, thus taking the reception data in the control section 25 through the reception data line h. Receiving operation at this time is executed irrespective of the advisability of transmitting operation.

As described-above, according to the present invention, it is capable of improving communication efficiency of the system.

Because, the mobile station has the means for notifying the matter that it becomes impossible to transmit to the base station therefrom, with the result that the communication after notification between the mobile station and the base station is shifted to only data transmission from the base station and data reception at the mobile station. For this reason, it is capable of avoiding unnecessary transmission and waiting of response reception at the side of the base station, and it causes communication amount to decrease in terms of transmission channel and reception channel in the system, thus it becomes possible to utilize limited frequency channel effectively.

Furthermore, according to the present invention, the mobile station in which transmission is impossible and reception is possible becomes possible to implement data reception.

Because, the mobile station has the means for notifying the matter that it becomes impossible to transmit to the base station therefrom, with the result that the communication after notification between the mobile station and the base station is shifted to only data transmission from the base station and data reception at the mobile station. For this reason, the method of two-way communication system is capable of being cancelled. In the conventional full duplex two-way radio communication system which requires two-way session, transmission from the mobile station is indispensable thereto. While in the two-way radio paging system according to the present invention, data reception in the mobile station becomes possible. Receiving operation at this time is executed irrespective of the advisability of transmitting operation.

While preferred embodiments of the invention have been described using specific terms, such description is for illustrative purpose only, and it is to be understood that changes and variations may be made without departing from the spirit or scope of the following claims.

## Claims

1. A two-way radio paging system comprising:
a transmission base station (1) connected to an exchange (4) by a control line and a data line for transmitting calling signal and, connected to a reception base station (3) on a ground through said exchange (4);
a mobile station (2) having means for notifying a matter that transmission from said mobile station (2) to a base station becomes impossible, toward said base station, and means for shifting communication between said mobile station (2) and said base station to data transmission from said base station and data reception at said mobile station (2) after notification of impossibility, wherein said mobile station (2) receives said calling signal from said transmission base station (1), and transmits a reception-confirmation-response-signal to said reception base station (3);
a reception base station (3) connected to said exchange (4) by a control line and a data line for receiving said reception-confirmation-response-signal transmitted from said mobile station (2); and
an exchange (4) for judging that transmission of said calling signal which is implemented from said transmission base station (1) to said mobile station (2) is normally completed based upon information from both of said transmission base station (1) and said reception base station (3).

2. A mobile station (2) of a two-way radio paging system comprising:
a transmitting power source section (21) for supplying transmitting power c to a transmission section (22) through a transmitting power source line D;
a voltage detection section (24) for monitoring power source voltage of the transmitting power c, thus judging whether or not the power source voltage of the transmitting power c is higher than prescribed level to notice the result of judgement to a transmission section (22);
a reception section (28);
a control section (25) for controlling a display section (26) as a low voltage notification signal d; and
a receiving power source section (27) for supplying power source to the reception section (28) through a reception power source line E.

3. A mobile station (2) according to claim 2, wherein said voltage detection section (24) comprises:
a constant voltage generating section (241) for generating prescribed voltage; and
a voltage comparison section (242) for comparing a power source voltage for transmission with said prescribed voltage generated by said constant voltage generating section (241),
wherein when voltage-value of said power source voltage for transmission is higher than said prescribed voltage, said voltage comparison section (242) outputs said power source voltage for transmission to said control section (25) as it is, while when voltage-value of said power source voltage for transmission drops lower than said prescribed voltage said voltage comparison section (242) outputs GND-voltage (0V) to said control section (25).

4. A mobile station (2) according to claim 2, wherein when output voltage from said voltage detection section (24) changes said prescribed voltage into said GND-voltage, said control section (25) judges that a condition of communication is a condition where impossibility of transmission is predicted, while when output voltage from said voltage detection section (24) changes said GND-voltage into said prescribed voltage, said control section (25) judges a condition of communication is a condition where normal transmission is capable.

5. A base station consisting of a transmission base station (1) which is dedicated base station for transmission and a reception base station (3) which is dedicated base station for reception,
said transmission base station (1) comprising:
a data input section (13) for receiving data from an exchange (4) using a transmission data line;
a data-format section (12) for converting a data inputted to said data input section (13) into signal format of a forward data;
a radio transmission section (11) for transmitting formatted transmission data formatted at said data-format section to said mobile station (2) through an antenna; and
a control section (14), and
said reception base station (3) comprising:
a radio reception section (31) for receiving data of reverse data-format from said mobile station (2);
a data-unformat section (32) for unformatting received data received from said radio reception section into data-format so as to be utilized in the side of said exchange (4);
a data output section (33) for transmitting unformatted data unformatted at said data-unformat section (32); and
a control section (34).

6. A two-way communication method of a two-way radio paging system comprising the steps of:
transmitting calling signal from a transmission base station (1);
notifying a matter that transmission from a mobile station (2) to a base station becomes impossible, toward said base station;
shifting communication between said mobile station (2) and said base station to data transmission from said base station and data reception at said mobile station (2) after notification of impossibility;
receiving said calling signal from said transmission base station (1);
transmitting a reception-confirmation-response-signal to said reception base station (3);
receiving said reception-confirmation-response-signal transmitted from said mobile station (2);
judging that transmission of said calling signal which is implemented from said transmission base station (1) to said mobile station (2) is normally completed based upon information from both of said transmission base station (1) and said reception base station (3).

7. A two-way communication method in a mobile station (2) of a two-way radio paging system comprising the steps of:
supplying transmitting power c to a transmission section (11) through a transmitting power source line D;
monitoring power source voltage of the transmitting power c;
judging whether or not the power source voltage of the transmitting power c is higher than prescribed level to notice the result of judgement to a transmission section (11);
controlling a display section as a low voltage notification signal d; and
supplying power source to the reception section through a reception power source line E.

8. A two-way communication method in a voltage detection section (24) of a mobile station (2) of a two-way radio paging system comprising the steps of:
generating prescribed voltage by a constant voltage generating section (241);
comparing a power source voltage for transmission with said prescribed voltage generated by said constant voltage generating section (241); and
outputting said power source voltage for transmission to a control section (25) as it is when voltage-value of said power source voltage for transmission is higher than said prescribed voltage, while when voltage-value of said power source voltage for transmission drops lower than said prescribed voltage, outputting GND-voltage (0V) to said control section (25).

9. A two-way communication method in a control section (25) of a mobile station (2) of a two-way radio paging system comprising the steps of:
judging the condition of communication as condition where impossibility of transmission is predicted, when output voltage from the voltage detection section (24) changes into the GND-voltage from the prescribed-voltage, while when output voltage from the voltage detection section (24) changes into the prescribed-voltage from the GND-voltage, judging the condition of communication as condition where normal transmission is capable;
transmitting a reception confirmation response data when the power source voltage for transmission is more than said prescribed-voltage, while when the power source voltage for transmission is less than said prescribed-voltage, transmitting the transmission continuation impossibility notification; and
transmitting the transmission continuation possibility notification when output voltage from said voltage detection section (24) changes said GND-voltage into said prescribed-voltage, because said control section (25) judges the condition of communication as condition where normal transmission is capable.

10. In a two-way radio paging system which comprises a transmission base station (1) for transmitting calling signal, a mobile station (2) having means for notifying a matter that transmission from said mobile station (2) to a base station becomes impossible, toward said base station, and means for shifting communication between said mobile station (2) and said base station to data transmission from said base station and data reception at said mobile station (2) after notification of impossibility, wherein said mobile station (2) receives said calling signal from said transmission base station (1), and transmits a reception-confirmation-response-signal to said reception base station (3), a reception base station (3) for receiving said reception-confirmation-response-signal transmitted from said mobile station (2), and an exchange (4) for judging that transmission of said calling signal which is implemented from said transmission base station (1) to said mobile station (2) is normally completed based upon information from both of said transmission base station (1) and said reception base station (3),
said two-way radio paging system having:
a first function for predicting to judge the fact that it becomes impossible to continue transmitting operation of said reception confirmation response signal from own station to said reception base station (3) depending upon decreasing rate of power source residual capacity of own station;
a second function for notifying the fact that it becomes impossible to continue transmitting operation of said reception confirmation response signal from own station to said reception base station (3);
a third function for judging the fact that it becomes possible to continue transmitting operation of said reception confirmation response signal from own station to said reception base station (3) depending upon recovery of power source residual capacity of own station; and
a fourth function for noticing that continuation of transmitting operation of said reception confirmation response signal is capable of being implemented from said own station to said reception base station (3).

11. A two-way radio paging system according to claim 9, wherein said two-way radio paging system further having:
a fifth function for shifting a mode to a mode judging the fact that transmission of said calling signal which is transmitted from said transmission base station (1) to said mobile station (2) is normally completed, when said exchange (4) is noticed that it becomes impossible to continue transmitting operation of said reception confirmation response signal from said mobile station (2) to said reception base station (3) by said first function of said mobile station (2) without reception of said reception confirmation response signal to be transmitted from said mobile station (2); and
a sixth function for shifting a mode to a mode judging the fact that transmission of said calling signal which is transmitted from said transmission base station (1) to said mobile station (2) is normally completed, when said exchange (4) is noticed that continuation of transmitting operation is capable of implementing from said mobile station (2) to said reception base station (3) by said third function of said mobile station (2) by reception of said reception confirmation response signal transmitted from said mobile station (2).
